# EUROPÄISCHE PATENTANMELDUNG

(11) **EP 2 837 545 A2**
(43) Veröffentlichungstag der Anmeldung: **18.02.2015**
(21) Anmeldenummer: 14002835.8
(22) Anmeldetag: 14.08.2014
(51) Int. Cl.: B62B 5/00

(54) **Fördereinheit und Fördersystem mit solchen Fördereinheiten**

(30) Priorität: 16.08.2013 DE 102013013684
(71) Anmelder: Eisenmann AG, 71032 Böblingen (DE)
(72) Erfinder: Gawelczyk, Klaus, 70372 Stuttgart (DE)
(74) Vertreter: Heinrich, Hanjo

(57) **Zusammenfassung**

Eine Fördereinheit zum Fördern von beladenen oder unbeladenen Ladungsträgern (12) umfasst ein Fahrwerk (24), welches auf Bodenrollen (26) verfahrbar ist. Das Fahrwerk (24) führt ein Tragelement (28) mit sich, welches bezogen auf das Fahrwerk (24) derart anhebbar oder absenkbar ist, dass die Fördereinheit (20) in einer Leerkonfiguration einen Ladungsträger (12) unterfahren und in einer Förderkonfiguration einen Ladungsträger (12) mit dem Tragelement (28) aufnehmen und fördern kann. Mittels eines Antriebssystems (30) ist wenigstens eine der Bodenrollen (26) antreibbar. Das Antriebssystem (30) umfasst wenigstens eine Antriebsbaugruppe (32) mit einer einstückigen Gehäuseeinheit (36), welche die wenigstens eine antreibbare Bodenrolle (26) lagert und wenigstens eine Antriebseinrichtung (38) für diese Bodenrolle (26) mit sich führt. Außerdem ist ein Fördersystem (10) zum Fördern von beladenen oder unbeladenen Ladungsträgern (12) mit mehreren Fördereinrichtungen (18) angegeben, bei dem die Fördereinrichtungen (18) jeweils wenigstens zwei zusammenarbeitende derartige Fördereinheiten (20) umfassen.

## Beschreibung

Die Erfindung betrifft eine Fördereinheit zum Fördern von beladenen oder unbeladenen Ladungsträgern mit
a) einem Fahrwerk, welches auf Bodenrollen verfahrbar ist;
b) einem von dem Fahrwerk mitgeführten Tragelement, welches bezogen auf das Fahrwerk anhebbar oder absenkbar ist, derart, dass die Fördereinheit in einer Leerkonfiguration einen Ladungsträger unterfahren und in einer Förderkonfiguration einen Ladungsträger mit dem Tragelement aufnehmen und fördern kann;
c) einem Antriebssystem, mittels welchem wenigstens eine der Bodenrollen antreibbar ist.

Außerdem betrifft die Erfindung ein Fördersystem zum Fördern von beladenen oder unbeladenen Ladungsträgern mit mehreren Fördereinrichtungen.

Derartige Fördereinheiten und ein solches Fördersystem sind beispielsweise aus der DE 10 2007 046 868 A1 bekannt. Dort bilden jeweils zwei Fördereinheiten nach Art einer Förderkufe eine Fördereinrichtung, wobei zwei Förderkufen für das Fördern von Ladungsträgern in Form von Paletten und insbesondere von so genannten Euro-Paletten konzipiert sind. Hierzu können die beiden Förderkufen als Förderkufenpaar eine Palette unterfahren, diese dann anheben und an einen anderen Ort fördern.

Üblicherweise sind bei einem Antriebssystem hierfür mehrere Einzelkomponenten mit jeweils eigenen Gehäusen aneinander befestigt, mit deren Hilfe die Bodenrollen angetrieben werden können.

Im Falle einer Störung des Antriebssystems muss zunächst nach der Quelle der Störung gesucht und dann die betroffene Komponente als Einzelbauteil gelöst und ausgetauscht werden. Allein die Fehlersuche kann jedoch bereits recht zeitintensiv sein; in dieser Zeit steht die betroffene Fördereinheit nicht für den Förderprozess zur Verfügung.

Es ist Aufgabe der Erfindung, eine Fördereinheit und ein Fördersystem der eingangs genannten Art zu schaffen, welche diesen Gedanken Rechnung tragen.

Diese Aufgabe wird bei einer Fördereinheit der eingangs genannten Art dadurch gelöst, dass
d) das Antriebssystem wenigstens eine Antriebsbaugruppe mit einer einstückigen Gehäuseeinheit umfasst, welche die wenigstens eine antreibbare Bodenrolle lagert und wenigstens eine Antriebseinrichtung für diese Bodenrolle mit sich führt.

Eine derartige Antriebsbaugruppe kann kompakt sein und vor allem als Baueinheit gehandhabt werden. Im Falle einer Störung wird die Antriebsbaugruppe als solche Baueinheit ausgetauscht, so dass die Fördereinheit unmittelbar im Anschluss an den Austausch wieder für den Förderprozess zur Verfügung steht. Die Untersuchung, welche Komponente des Antriebssystems und insbesondere der Antriebsbaugruppe genau für die Störung verantwortlich ist, sowie deren Reparatur oder Austausch kann dann an einem anderen Ort in Ruhe durchgeführt werden, ohne dass dies den Förderprozess beeinflusst.

Je nach Einsatzweck kann es günstig sein, wenn die Antriebseinrichtung für die antreibbare Bodenrolle eine Antriebseinheit oder aber eine Antriebseinheit und Getriebemittel umfasst.

Die Fördereinheit kann besonders gut manövriert werden, wenn die Gehäuseeinheit zwei antreibbare Bodenrollen lagert, welche mittels der Antriebseinrichtung antreibbar sind.

Dabei ist es günstig, wenn die Antriebseinrichtung für jede antreibbare Bodenrolle eine Antriebseinheit oder eine Antriebseinheit und Getriebemittel umfasst. Auf diese Weise kann jede antreibbare Bodenrolle separat und unabhängig von der weiteren Bodenrolle der Antriebsbaugruppe betrieben werden. In diesem Fall ist die Antriebsbaugruppe vorzugsweise um eine Drehachse drehbar am Fahrwerk gelagert, die vertikal ausgerichtet ist, wenn die Fördereinheit auf einem Boden ruht. Dann kann die Fördereinheit auch Kurven fahren und eine Palette auch auf der Stelle gedreht werden, was weiter unten nochmals erläutert wird.

Dabei können die beiden antreibbaren Bodenrollen koaxial oder achsparallel zueinander von der Gehäuseeinheit gelagert sein.

Für eine besonders kompakte Anordnung der beteiligten Komponenten ist es vorteilhaft, wenn die Antriebseinheit eine Antriebswelle umfasst, die achsparallel zur Bodenrolle verläuft und direkt oder über die Getriebemittel mit der Bodenrolle in Wirkverbindung steht. So können die Bauteile gleichsam dicht nebeneinander angeordnet sein.

Hierfür hat es sich als günstig erwiesen, wenn die Gehäuseeinheit zwei achsparallele Gehäusehülsen für die Antriebseinheiten umfasst, wobei die Gehäusehülsen über ein Verbindungsglied miteinander verbunden sind, welches die Bodenrollen achsparallel zu den Gehäusehülsen lagert.

Wenn die Außenkontur der Gehäuseeinheit keine Kanten aufweist, können Kräfte und Momente, die beim Fördern von Ladungsträgern auf die Antriebsbaugruppen wirken, gut über die Gehäuseeinheit verteilt und so kompensiert werden, wodurch die Materialbelastungen im Betrieb verringert sind.

Bei an- und miteinander befestigen Einzelbauteilen gibt es stets Belastungsstellen, an denen so hohe Kräfte wirken können, dass es zu einem Auseinanderreißen des Bauteilverbundes kommen kann.

Im Hinblick auf ein Fördersystem der eingangs genannten Art wird die oben angegebene Aufgabe dadurch gelöst, dass
die Fördereinrichtungen jeweils wenigstens zwei zusammenarbeitende Fördereinheiten mit einigen oder allen der oben erläuterten Merkmale umfassen.

Die hierdurch erreichten Vorteile entsprechen sinngemäß den oben zu der Fördereinheit beschriebenen Vorteilen.

Nachfolgend wird ein Ausführungsbeispiel der Erfindung anhand der Zeichnungen näher erläutert. In diesen zeigen:
- Figur 1: eine perspektivische Ansicht eines Fördersystems zum Fördern von Ladungsträgern, bei welchem zwei unabhängig voneinander verfahrbare, kufenartige Fördereinheiten eine Fördereinrichtung bilden;
- Figur 2: eine der Figur 1 entsprechende perspektivische Ansicht des Fördersystems, wobei außerdem ein Ladungsträger in Form einer Palette gezeigt ist;
- Figur 3: eine Seitenansicht einer Fördereinheit in teilweiser Durchsicht, so dass ein Fahrwerk und ein Antriebssystem zu erkennen sind;
- Figur 4: eine Ansicht von Oben in teilweiser Durchsicht auf eine Fördereinheit in einer Linearfahrt-Konfiguration;
- Figur 5: eine Ansicht von Oben in teilweiser Durchsicht auf eine Fördereinheit in einer Kurvenfahrt-Konfiguration
- Figur 6: eine perspektivische Ansicht einer Antriebsbaugruppe des Antriebssystems mit einer einstücken Gehäuseeinheit;
- Figur 7: eine Ansicht von oben auf die Antriebsbaugruppe von Figur 6;
- Figur 8: eine Ansicht von Oben in teilweiser Durchsicht auf eine Fördereinheit in einer Querfahrt-Konfiguration mit einer abgewandelten Antriebsbaugruppe.

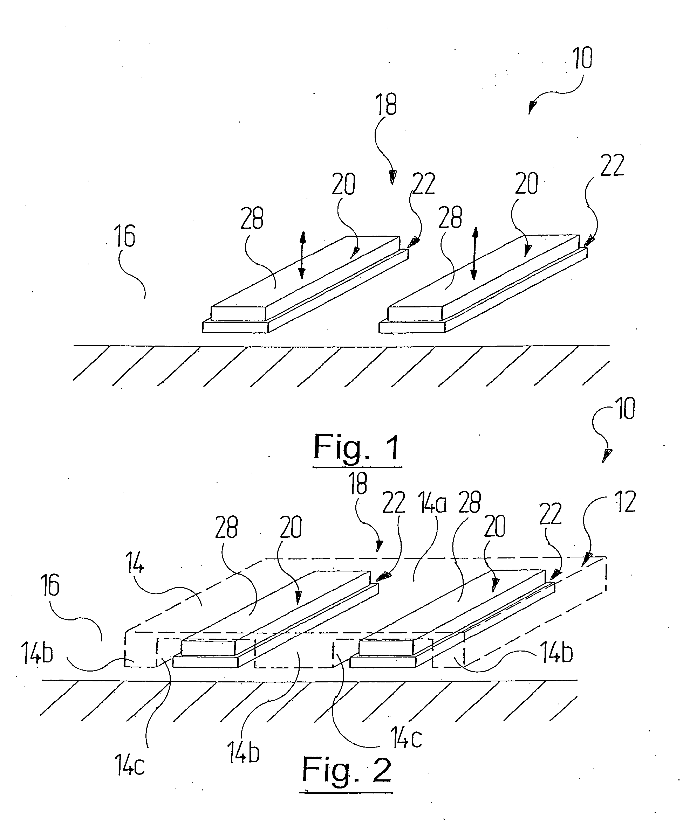

In den Figuren 1 und 2 ist mit 10 insgesamt ein Fördersystem bezeichnet, mittels welchem beladene oder unbeladene Ladungsträger 12 gefördert werden können. Als Beispiel für Ladungsträger 12 ist in Figur 2 eine Palette 14 mit gestrichelten Linien angedeutet, wie sie an und für sich bekannt ist und die eine Tragfläche 14a definiert, die über Auflageelemente 14b auf einem Boden 16 ruht. Zwischen zwei benachbarten Auflageelementen 14b verbleibt jeweils ein lichter Durchgang 14c, der nach unten zum Boden 16 hin und an beiden Stirnenden offen ist. Insbesondere kann eine solche Palette 14 als so genannte Euro-Palette ausgebildet sein.

Das Fördersystem 10 umfasst eine Vielzahl von Fördereinrichtungen 18, die auf dem Boden 16 verfahren werden können und von denen in den Figuren 1 und 2 jeweils eines gezeigt ist. Eine Fördereinrichtung 18 ist ihrerseits aus zwei Fördereinheiten 20 gebildet. Die Fördereinheiten 20 sind beim vorliegenden Ausführungsbeispiel als Förderkufen 22 ausgebildet.

Diese Fördereinheiten 20 kommunizieren in an und für sich bekannter Weise mit einer nicht eigens gezeigten Zentralsteuerung, welche den Förderprozess koordiniert.

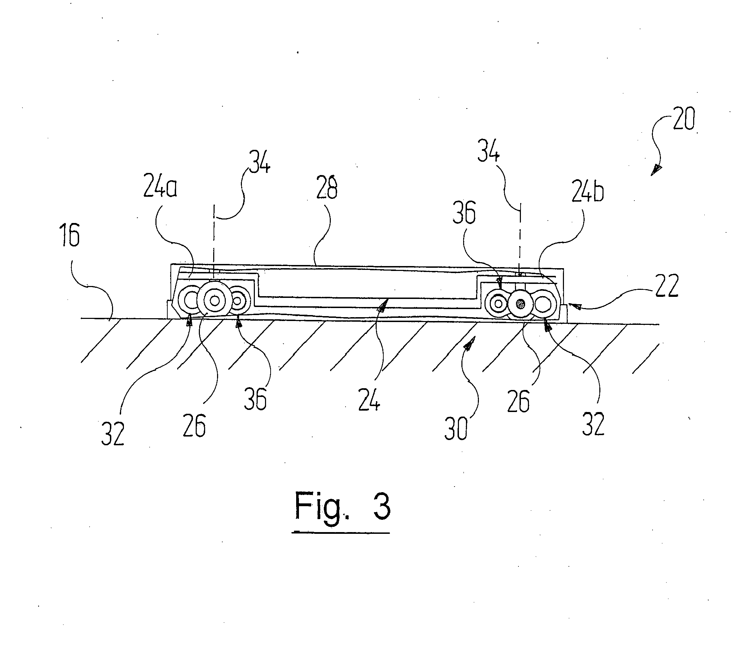

In den Figuren 3 bis 5 ist nun eine der Fördereinheiten 20 der Fördereinrichtung 18 separat gezeigt. Die Fördereinheit 20 umfasst ein Fahrwerk 24, welches auf Bodenrollen 26 verfahren werden kann und zwei Endbereiche 24a, 24b definiert.

Das Fahrwerk 24 führt außerdem ein Tragelement 28 mit sich, welches bezogen auf das Fahrwerk 24 angehoben oder abgesenkt werden kann; dies ist lediglich in Figur 1 durch Doppelpfeile veranschaulicht. Wenn das Tragelement 28 eine abgesenkte Stellung einnimmt, befindet sich die Fördereinheit 20 in einer Leerkonfiguration, in welcher sie den Ladungsträger 12 unterfahren kann. Hierzu ist die Fördereinheit 20 in ihrer Außenkontur auf zu fördernde Ladungsträger 12 abgestimmt. Im Falle einer Palette 14 bedeutet dies, dass die Fördereinheit 20 in ihrer Leerkonfiguration solche Abmessungen hat, dass sie in einen von deren lichten Durchgängen 14c einfahren kann, so dass sich die Fördereinheit 20 in diesem Durchgang 14c unter der Tragfläche 14a der Palette 14 befindet.

Umgekehrt müssen auch die Ladungsträger 12 an die Fördereinheiten 20 angepasst sein und wenigstens zwei solche lichten Durchgänge 14c bereitstellen.

Dann wird das Tragelement 28 einer Fördereinheit 20 bezogen auf das Fahrwerk 24 angehoben. Wenn das Tragelement 28 eine angehobene Stellung einnimmt, befindet sich die Fördereinheit 20 in einer Förderkonfiguration, in der sie einen Ladungsträger 12 mit ihrem Tragelement 28 aufnehmen und fördern kann.

Bei einer Fördereinrichtung 18 aus zwei Fördereinheiten 20 fahren die beiden Fördereinheiten 20 koordiniert nebeneinander in die benachbarten Durchgänge 14c der Palette 14 ein, wie es aus Figur 2 ersichtlich ist. Dann werden die Tragelemente 28 der beiden Fördereinheiten 20 synchronisiert angehoben, so dass die Palette 14 als Ganzes und gegebenenfalls mit dem darauf platzierten Fördergut angehoben wird. Dann kann die Palette 14 mit Hilfe der Fördereinrichtung 18 an einen anderen Ort gefördert werden.

Die Abstimmung und gegebenenfalls Synchronisierung der Steuervorgänge bei den Fördereinheiten 20 und von deren Bewegungen kann über die angesprochene Zentralsteuerung und alternativ oder ergänzend mit Hilfe von ebenfalls nicht eigens gezeigten On-Board-Steuerungen der Fördereinheiten 20 koordiniert werden.

Jede Fördereinheit 20 umfasst ein Antriebssystem 30, mittels welchem die Bodenrollen 26 antreibbar sind.

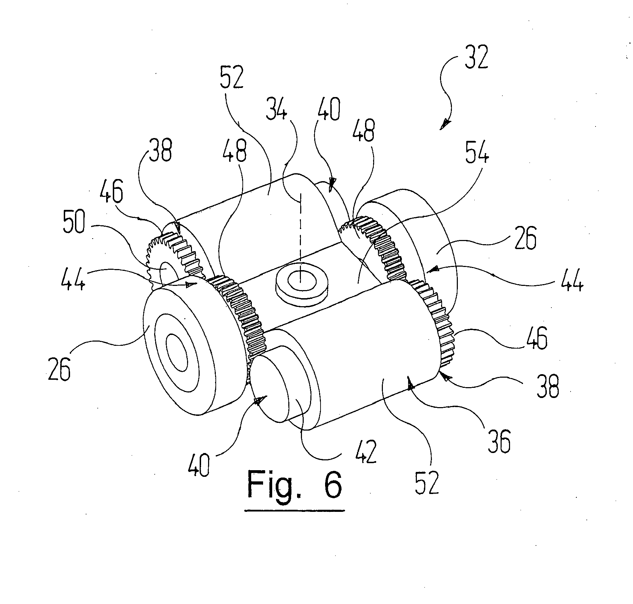

Hierzu trägt das Fahrwerk 24 an seinen Endbereichen 24a, 24b jeweils eine Antriebsbaugruppe 32, welche um eine Drehachse 34 verdrehbar gelagert ist. Die Drehachsen 34 sind nur in den Figur 3 und 6 gezeigt und verlaufen vertikal, wenn die Fördereinheit 20 mit den Bodenrollen 26 auf dem Boden 16 aufliegt.

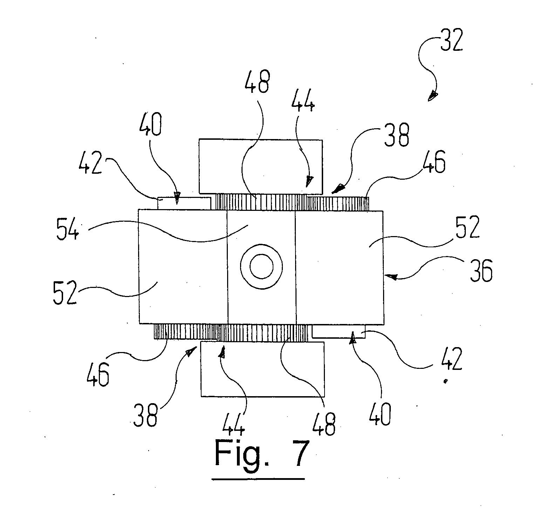

Wie in den Figuren 6 und 7 gut zu erkennen ist, umfasst die Antriebsbaugruppe 32 eine einstückige Gehäuseeinheit 36, welche zwei Bodenrollen 26 lagert und für jede Bodenrolle 26 eine Antriebseinrichtung 38 mit sich führt. Die Gehäuseeinheit 34 kann z.B. als Strangpressprofil aus Kunststoff hergestellt sein. Aber auch Metalle wie Aluminium oder Edelstahl sind als Gehäusematerial geeignet.

Die Antriebseinrichtungen 38 umfassen beim vorliegenden Ausführungsbeispiel als Antriebseinheit 40 jeweils einen Elektromotor 42 der über Getriebemittel 44 in Form von Zahnrädern 46 und 48 mit der jeweils zugehörigen antreibbaren Bodenrolle 26 bzw. deren Lagerachse getrieblich verbunden ist. Bei einer nicht eigens gezeigten Abwandlung können die Antriebseinheiten 40 die Bodenrollen 26 auch ohne zwischengeschaltete Getriebemittel antreiben.

Die Bodenrollen 26 sind vorliegend drehfest mit jeweils einem Zahnrad 48 der Getriebemittel 44 verbunden, die ihrerseits in ein jeweiliges Zahnrad 46 eingreifen, das drehfest mit einer Antriebswelle 50 der Antriebseinheit 40, und damit vorliegend des Elektromotors 42, verbunden ist. Hierzu verlaufen die Antriebswellen 50 der Antriebseinheiten 40 achsparallel zu den Bodenrollen 26.

Die Gehäuseeinheit 36 umfasst nun zwei achsparallele Gehäusehülsen 52, in denen jeweils eine Antriebseinheit 40 untergebracht ist. Diese Gehäusehülsen 52 sind, die über ein Verbindungsglied 54 miteinander verbunden, welches die Bodenrollen 26 achsparallel zu den Gehäusehülsen 52 lagert.

Beim Zusammenbau der Antriebsbaugruppe 32 können die Antriebseinheiten 40 beispielsweise in die Gehäusehülsen 52 eingesteckt und dort verankert, beispielsweise verrastet werden.

Im Schnitt quer zu den Gehäusehülsen 52 ist die Gehäuseeinheit 36 hantelförmig und das Verbindungsglied 54 insbesondere plattenförmig. Das Verbindungsglied 52 umfasst auf den gegenüberliegenden freien Schmalrändern Stecköffnungen, in welche in den Figuren nicht zu erkennende Stummelachsen der Bodenrollen 26 eingesteckt werden können.

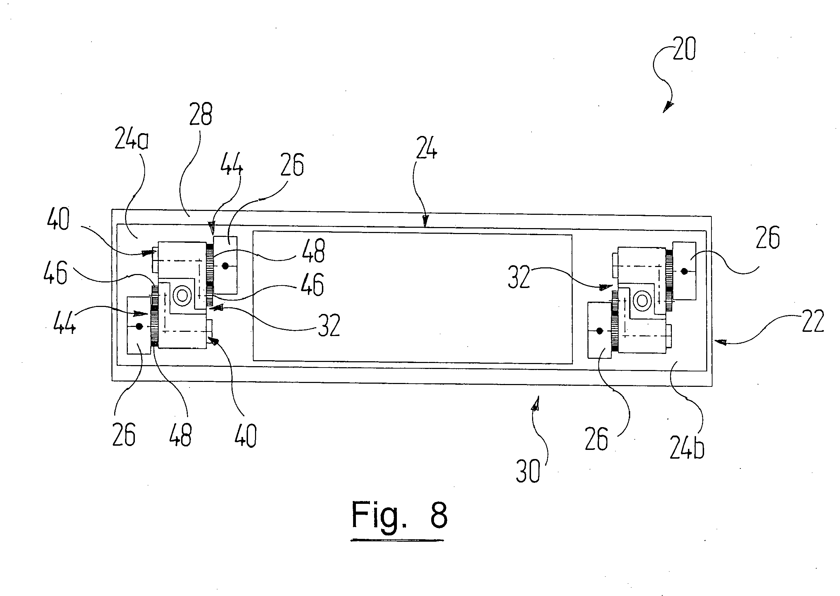

Die Gehäuseeinheit 36 lagert die beiden Bodenrollen 26 beim vorliegenden Ausführungsbeispiel koaxial zueinander. Bei einer Abwandlung können die beiden Bodenrollen 26 auch achsparallel zueinander gelagert sein. Dies ist in Figur 8 veranschaulicht, welche die Fördereinheit 20 in einer Querfahrt-Konfiguration zeigt, in welcher die Achsen der Bodenrollen 26 parallel zur Längsrichtung der Fördereinheit 20 ausgerichtet sind. Dadurch, dass die Bodenrollen 26 nicht koaxial, sondern achsparallel von der Gehäuseeinheit 36 gelagert sind, ist die Fördereinheit bei einer Querfahrt gegen ein Verkippen stabilisiert. In Figur 8 sind auch die Auflagepunkte der Bodenrollen 26 angedeutet.

Das jeweilige Zahnrad 48 an den Bodenrollen 26 liegt dort vor einer Antriebseinheit 40, weshalb das der Antriebseinheit 40 zugeordnete Zahnrad 46 vor dem Verbindungsglied 54 angeordnet und über ein strichpunktiert angedeutetes Koppelgetriebe mit der Antriebseinheit 40 verbunden ist. Gegebenenfalls können die Bodenrollen 26 auch unmittelbar mit der Antriebswelle 50 einer Antriebseinheit 40 gekoppelt sein, ohne das Getriebemittel 44 zwischengeschaltet sind.

Die Außenkontur der Gehäuseeinheit 36 weist keine Kanten auf, sondern nur gerade oder gekrümmte Flächen. Wie eingangs erwähnt können hierdurch Kräfte und Momente, die in weitgehend allen Fahr- und Fördersituationen der Fördereinrichtung 20 auf die Antriebsbaugruppe 32 wirken, gleichmäßig auf die Gehäuseeinheit 36 verteilt und so aufgefangen werden, ohne dass es zu Kraft- oder Momentspitzen auf die beteiligten Komponenten kommt.

Durch die kompakte Antriebsbaugruppe 32 sind die miteinander arbeitenden Komponenten räumlich sehr nahe beieinander angeordnet. Zudem sind insbesondere Elektronikkomponenten, wie beispielsweise die Antriebseinheiten 40 in Form der Elektromotoren 42 quasi gekapselt und dadurch geschützt. Gegebenenfalls können die Komponenten auch in der Gehäuseeinheit 36 versiegelt werden, so dass eine dichte Kapselung erzielt wird. Lediglich Versorgungs- und Kommunikationsleitungen müssen aus dieser Kapselung austreten können.

Im Falle einer Störung kann eine Antriebsbaugruppe 32 als Ganzes gegen eine funktionstüchtige Antriebsbaugruppe 32 ausgetauscht werden; die defekte Antriebsbaugruppe 32 kann dann separat gewartet werden, ohne dass die Fördereinheit 20 stillsteht.

Die Fördereinheiten 20 werden nun verfahren, indem die Antriebseinheiten 40 aufeinander abgestimmt bestromt werden, wodurch jede Bodenrolle 26 gezielt und individuell in einer bestimmten Drehrichtung und mit einer bestimmten Drehzahl angetrieben werden kann.

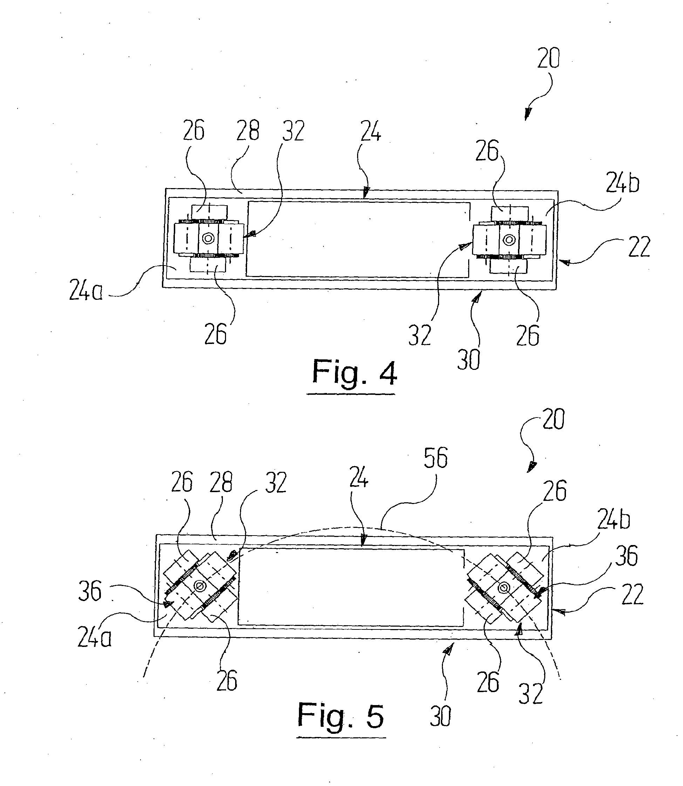

Wenn alle vier Bodenrollen 26 einer Fördereinheit 20 quer zur Längsrichtung der Fördereinheit 20 ausgerichtet sind und alle vier Antriebseinheiten gleich angesteuert werden, nimmt die Fördereinheit 20 eine Linearfahrt-Konfiguration ein und fährt geradeaus. Dies zeigt exemplarisch Figur 4, in welcher der Übersichtlichkeit halber nicht alle Komponenten mit Bezugszeichen versehen sind.

Für Kurvenfahrten muss die Ausrichtung der Achsen der Bodenrollen 26 bezogen auf die Längsrichtung der Fördereinheiten 20 geändert werden. Wenn die beiden Bodenrollen 26 einer Antriebsbaugruppe 32 gegensinnig angetrieben werden, verdreht sich die Antriebsbaugruppe 32 mit den Bodenrollen 26 um die Drehachse 34. So kann die Fördereinheit einerseits eine in Figur 5 gezeigt Kurvenfahrt-Konfiguration einnehmen und ein dort angedeutete Kreiskurve 56 fahren, wenn die Antriebsbaugruppen 32 so ausgerichtet sind, dass die Achsen der Bodenrollen 26 senkrecht auf der zu fahrenden Kreiskurve 56 stehen. Bei zwei Fördereinheiten 20 einer Fördereinrichtung 18 kann eine Palette 14 dann beispielsweise auf der Stelle verdreht werden, wenn alle Antriebsbaugruppen 32 in dieser Weise auf ein und denselben Kreis ausgerichtet sind. Auch in Figur 5 tragen der Übersichtlichkeit halber nicht alle Komponenten ein Bezugszeichen.

Bei Kurvenfahrten berücksichtigt die Steuerung die unterschiedlichen Laufwege der bezogen auf die Kurve radial außen liegenden Bodenrollen 26 gegenüber den radial innen liegenden Bodenrollen 26.

Eine Art Parallelverschiebung einer Palette 14 kann beispielsweise erfolgen, wenn die Antriebsbaugruppen 32 von beiden Fördereinheiten 20 einer Fördereinrichtung 18 zunächst in die gleiche Drehrichtung und um den gleichen Drehwinkel um die Drehachse 34 verdreht werden und die Bodenrollen 26 dann alle synchron und gleich angetrieben werden.

Das Anheben und Absenken des Tragelements 28 kann beispielsweise dadurch ermöglicht sein, dass das Tragelement 28 über einen jeweiligen Schneckentrieb mit den Antriebsbaugruppen 32 gekoppelt ist. Die Antriebsbaugruppen 32 können auf der Stelle um die Drehachse 34 verdreht werden, was dann abhängig von der Drehrichtung ein Anheben oder Absenken des Tragelements bewirkt.

## Patentansprüche

1. Fördereinheit zum Fördern von beladenen oder unbeladenen Ladungsträgern (12) mit
a) einem Fahrwerk (24), welches auf Bodenrollen (26) verfahrbar ist;
b) einem von dem Fahrwerk (24) mitgeführten Tragelement (28), welches bezogen auf das Fahrwerk (24) anhebbar oder absenkbar ist, derart, dass die Fördereinheit (20) in einer Leerkonfiguration einen Ladungsträger (12) unterfahren und in einer Förderkonfiguration einen Ladungsträger (12) mit dem Tragelement (28) aufnehmen und fördern kann;
c) einem Antriebssystem (30), mittels welchem wenigstens eine der Bodenrollen (26) antreibbar ist,
**dadurch gekennzeichnet, dass**
d) das Antriebssystem (30) wenigstens eine Antriebsbaugruppe (32) mit einer einstückigen Gehäuseeinheit (36) umfasst, welche die wenigstens eine antreibbare Bodenrolle (26) lagert und wenigstens eine Antriebseinrichtung (38) für diese Bodenrolle (26) mit sich führt.

2. Fördereinheit nach Anspruch 1, **dadurch gekennzeichnet, dass** die Antriebseinrichtung (38) für die antreibbare Bodenrolle (26) eine Antriebseinheit (40) oder eine An-triebseinheit (40) und Getriebemittel (44) umfasst.

3. Fördereinheit nach Anspruch 1 oder 2, **dadurch gekennzeichnet, dass** die Gehäuseeinheit (36) zwei antreibbare Bodenrollen (26) lagert, welche mittels der Antriebseinrichtung (38) antreibbar sind.

4. Fördereinheit nach Anspruch 3, **dadurch gekennzeichnet, dass** die Antriebseinrichtung (38) für jede antreibbare Bodenrolle (26) eine Antriebseinheit (40) oder eine Antriebseinheit (40) und Getriebemittel (44) umfasst.

5. Fördereinheit nach Anspruch 3 oder 4, **dadurch gekennzeichnet, dass** die beiden antreibbaren Bodenrollen (26) koaxial öder achsparallel zueinander von der Gehäuseeinheit (36) gelagert sind.

6. Fördereinheit nach einem der Ansprüche 2 bis 5, **dadurch gekennzeichnet, dass** die Antriebseinheit (40) eine Antriebswelle (50) umfasst, die achsparallel zur Bodenrolle (26) verläuft und direkt oder über die Getriebemittel (44) mit der Bodenrolle (26) in Wirkverbindung steht.

7. Fördereinheit nach Anspruch 6, **dadurch gekennzeichnet, dass** die Gehäuseeinheit (36) zwei achsparallele Gehäusehülsen 52) für die Antriebseinheiten (40) umfasst, wobei die Gehäusehülsen (52) über ein Verbindungsglied (54) miteinander verbunden sind, welches die Bodenrollen (26) achsparallel zu den Gehäusehülsen (52) lagert.

8. Fördereinheit nach Anspruch 7, **dadurch gekennzeichnet, dass** die Außenkontur der Gehäuseeinheit (36) keine Kanten aufweist.

9. Fördersystem zum Fördern von beladenen oder unbeladenen Ladungsträgern (12) mit mehreren Fördereinrichtungen (18), **dadurch gekennzeichnet, dass** die Fördereinrichtungen (18) jeweils wenigstens zwei zusammenarbeitende Fördereinheiten (20) nach einem der Ansprüche 1 bis 8 umfassen.
